# FASCICULE DE BREVET EUROPEEN

(11) **EP 2 431 270 B1**
(45) Date de publication et mention de la délivrance du brevet: **11.09.2013**
(21) Numéro de dépôt: 11181990.0
(22) Date de dépôt: 20.09.2011
(51) Int. Cl.: B62M 3/08

(54) **Pédale automatique pour cycle à levier arrière flexible**
Automatisches Fahrradpedal mit flexiblem hinterem Hebel
Automatic pedal for a cycle with flexible rear lever

(30) Priorité: 21.09.2010 FR 1057568
(43) Date de publication de la demande: 21.03.2012
(73) Titulaire: Look Cycle International, 58028 Nevers Cedex (FR)
(72) Inventeur: Bouchez, Julien, 13009 MARSEILLE (FR); Delangue, Fabien, 58640 VARENNES VAUZELLES (FR)
(74) Mandataire: Delprat, Olivier

(56) Documents cités:
- DE-A1- 19 518 084
- DE-U1-202005 019 542
- US-A1- 2007 137 430

## Description

L'invention concerne, de manière générale, les pédales automatiques pour cycle.

Les pédales automatiques comportent classiquement un corps de pédale pourvu à l'avant et à l'arrière de moyens d'accrochage servant à retenir une cale fixée à la semelle d'une chaussure. De telles pédales présentaient à l'origine un nombre de pièces relativement important. C'est ainsi que, outre le corps de pédale, elles comportaient une ligne d'axe, pour son montage sur une manivelle de pédalier, comprenant un axe, des bagues, des roulements, des joints, et sur laquelle était monté à rotation le corps de pédale, un levier arrière articulé sur le corps autour d'un axe de basculement, et un système élastique de contrainte du levier. Par exemple, le système élastique pouvait être réalisé à partir d'un ressort métallique ou en élastomère, une lame travaillant en flexion ou en flambage, ...

Comme on le conçoit, il est avantageux de réduire le nombre de pièces pour la réalisation des pédales afin de réduire le poids, le coût de fabrication et simplifier la logistique.

La société demanderesse a ainsi proposé de supprimer le taraudage de l'alésage prévu dans le corps de pédale pour y fixer l'axe de la pédale et les paliers d'appui de l'axe, relativement encombrants et chers à fabriquer. On pourra, à cet égard, se référer au document EP-A-1 063 161 dans lequel le système élastique de contrainte du levier est formé par une lame courbe élastiquement déformable associée à un moyen d'encliquetage qui vient, au montage, s'insérer dans l'axe de l'alésage pour l'axe de la pédale pour retenir celui-ci axialement. En outre, le levier comporte, au lieu et place de son axe d'articulation, une nervure cylindrique qui s'engage dans une rainure cylindrique correspondante du corps.

D'autres améliorations ont également été apportées aux pédales automatiques afin, notamment, d'améliorer le confort de pédalage. Un exemple de réalisation est décrit dans le document US 2007/137430 qui propose d'autoriser un déplacement relatif de la cale et de la pédale en conformant la partie avant de la pédale.

D'autres améliorations ont par ailleurs consisté à rendre les pédales universelles de manière à éviter l'emploi requis de cales spécifiques. On pourra, à cet égard, se référer au document JP 3034987.

On citera également des solutions qui consistent à améliorer le chaussage et le déchaussage, c'est-à-dire l'accrochage et le décrochage de la chaussure sur la pédale. Par exemple, le document US 5 105 683 décrit une pédale automatique qui procure une rigidité importante dans un agencement compact et dans laquelle la position du levier peut être définie précisément et son élasticité améliorée en réalisant le levier et le système élastique en une seule pièce qui comporte un pivot d'extrémité qui coopère avec une zone d'appui correspondante prévue dans le corps de pédale.

DE 202005 019542 divulgue les caractéristiques du préambule de la revendication 1.

Au vu de ce qui précède, le but de l'invention est de proposer une pédale automatique perfectionnée pour cycle qui permette d'améliorer encore le chaussage et le déchaussage et, notamment, de permettre un chaussage et un déchaussage selon des résistances différentes.

L'invention a donc pour objet une pédale automatique pour cycle, comprenant un corps de pédale muni à une première extrémité de premiers moyens d'accrochage et à une deuxième extrémité opposée à la première extrémité de deuxièmes moyens d'accrochage, un levier déformable élastiquement portant les deuxièmes moyens d'accrochage et susceptible de se déformer entre une première position dans laquelle une cale fixée sous une chaussure est maintenue entre les premiers et deuxièmes moyens d'accrochage et une deuxième position déformée permettant l'accrochage et le décrochage de la cale selon des mouvements d'accrochage et de décrochage respectifs.

Selon une caractéristique générale de cette pédale, le levier déformable comporte au moins une première zone déformable lors des mouvements d'accrochage et de décrochage et au moins une deuxième zone déformable lors de l'un des mouvements d'accrochage et de décrochage, lesdites première et deuxième zones ayant des rigidités différentes.

Grâce à l'emploi d'un levier ayant des zones déformables qui agissent sélectivement lors de l'accrochage et du décrochage, et qui présentent des rigidités différentes, il est possible de prévoir un chaussage facilité tout en conservant un maintien du pied au roulage sans déchaussage intempestif, notamment pour les cyclistes débutants. Il est également possible, à l'inverse, de prévoir un chaussage plus difficile.

Selon une autre caractéristique de la pédale automatique, le levier comporte au moins une première lame pourvue d'un crochet d'extrémité comprenant une rampe d'encliquetage transversale déformable lors de l'accrochage et une butée transversale destinée à assurer le maintien vertical de la chaussure.

Par exemple, la première lame comporte en outre au moins une surface d'appui orientée en oblique sensiblement latéralement et destinée à coopérer avec une surface d'appui complémentaire de la cale au moins lors du déchaussage pour déformer la lame médiane.

Le levier peut encore comporter au moins une deuxième lame pourvue d'un deuxième crochet d'extrémité comprenant une surface d'appui orientée en oblique sensiblement latéralement et destinée à coopérer avec une surface d'appui complémentaire de la cale pour son maintien latéral et en butée arrière et lors du décrochage.

Par exemple, la rampe d'encliquetage de la première lame a une longueur plus importante que la surface d'appui de la deuxième lame.

La surface d'appui peut s'étendre selon un angle d'environ 45° par rapport à un axe longitudinal de la pédale.

Avantageusement, le levier comporte une première lame et une deuxième lame disposée de chaque côté de la première lame, chaque deuxième lame comprenant une surface d'appui orientée en oblique sensiblement latéralement vers l'extérieur de la pédale.

Dans un mode de réalisation, les première et deuxième lames sont configurées de sorte que la rampe d'encliquetage du premier crochet est décalée par rapport à la surface d'appui des deuxièmes crochets.

Lesdites premières et deuxièmes zones déformables peuvent être réalisées à partir d'un même matériau et présenter des épaisseurs différentes pour leur conférer des rigidités différentes.

Par exemple, lesdites deuxièmes zones ont une rigidité relativement plus importante que lesdites premières zones.

Selon encore une autre caractéristique, la première lame a une épaisseur plus faible que les deuxièmes lames, et une largeur plus importante que lesdites deuxièmes lames.

Dans un mode de réalisation, le corps de pédale est entièrement réalisé en une seule pièce.

Par exemple, le corps de pédale peut comporter, de la première extrémité vers la deuxième extrémité, une première partie sensiblement plane, une deuxième partie coudée à convexité tournée vers une zone de réception de la cale, une troisième partie coudée à concavité tournée vers ladite zone de réception de la cale et une quatrième partie constituant lesdits deuxièmes moyens d'accrochage.

Dans divers modes de réalisation, lesdites première et deuxième zone peuvent avoir une rigidité réglable pour régler les forces de chaussage et de déchaussage.

A cet effet, par exemple, lesdites première et deuxième zones peuvent être dotées d'inserts de rigidification ou être réunies localement par des brides.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue en perspective d'une pédale automatique conforme à l'invention ;
- la figure 2 est une vue de dessus de la pédale de la figure 1 ;
- la figure 3 montre la pédale des figures 1 et 2 en début du chaussage ; et
- la figure 4 illustre le maintien latéral de la cale et le début de la phase de déchaussage.

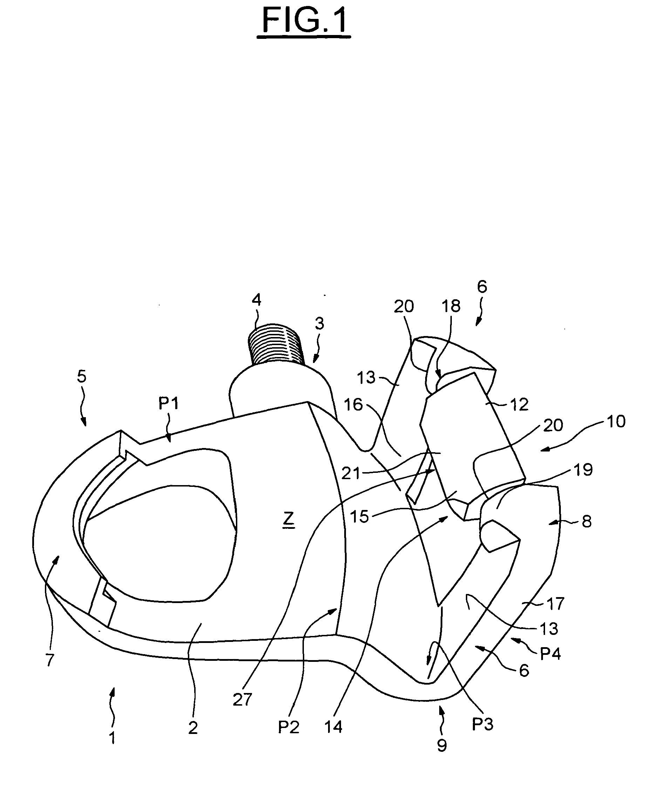

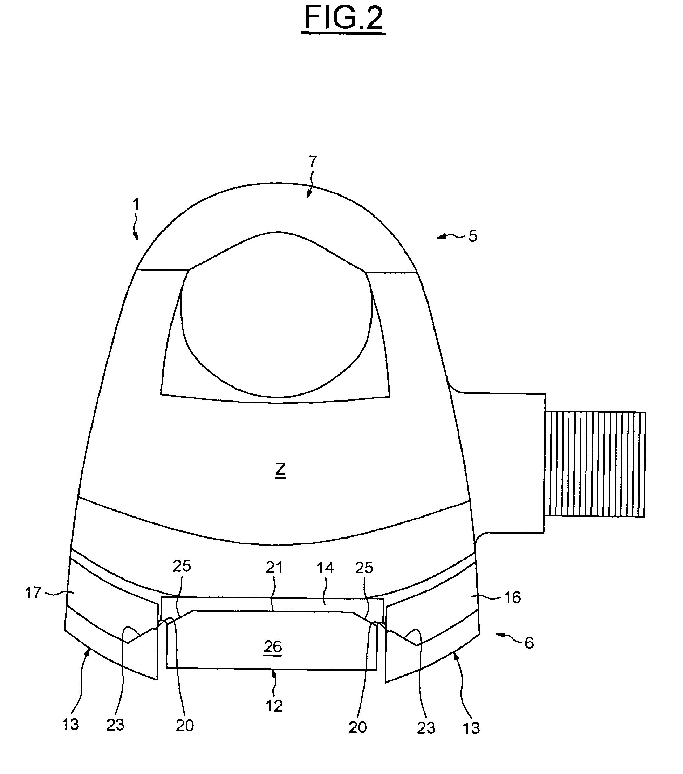

Sur les figures 1 et 2, on a représenté une pédale automatique selon l'invention, désignée par la référence numérique générale 1, dans une position horizontale correspondant à une position d'utilisation normale.

Dans l'exemple de réalisation illustré, la pédale comporte un corps 2 réalisé de façon monobloc. L'ensemble peut être réalisé en métal ou en plastique chargé de fibres, ou encore en fibres de carbone. Toutefois, tout autre matériau approprié pour l'utilisation envisagée peut également être utilisé. Mais, bien entendu, on ne sort pas du cadre de l'invention lorsque le corps 2 est réalisé en plusieurs pièces.

Comme on le voit, le corps 2 comporte un alésage transversal 3 servant au montage d'un axe 4 pour la fixation de la pédale 1 sur une manivelle d'un pédalier (figure 1).

Le corps 2 comporte une première extrémité 5, qui constitue une extrémité avant et une deuxième extrémité 6 qui constitue une extrémité arrière.

A l'avant, le corps 2 comporte des premiers moyens d'accrochage 7 réalisés sous la forme d'un crochet fixe et, à l'arrière, un levier 8 basculant autour d'un axe 9 horizontal et transversal et qui comporte des deuxièmes moyens d'accrochage 10.

Plus particulièrement, le levier 8 travaille en flexion et est configuré de manière à procurer des résistances différentes au chaussage et au déchaussage, tout en conférant lors du roulage un maintien efficace de la cale, tant latéralement que verticalement.

Comme on le voit, le levier arrière 8 est réalisé en au moins deux parties et comporte ainsi au moins une première zone déformable 12 et au moins une deuxième zone déformable 13 qui agissent de manière spécifique lors du chaussage et lors du déchaussage, et qui portent chacune un crochet d'extrémité.

Dans l'exemple de réalisation représenté, le levier arrière 8 comporte une première lame 14 dressée sensiblement verticalement et qui est pourvu au niveau de son extrémité libre d'un crochet 15 et deux lames latérales 16 et 17 prévues de part et d'autre de la première lame 14 et qui portent également chacune un crochet d'extrémité, respectivement 18 et 19.

Les deux lames latérales 16 et 17 sont également dressées sensiblement verticalement. Elles ont toutefois des crochets plus courts de telle sorte que l'extrémité avant 20 des crochets latéraux 18 et 19 des lames latérales soit décalée vers l'arrière par rapport à l'extrémité avant 21 du crochet 15 de la lame médiane 14. Le chaussage s'effectue selon un mouvement d'insertion du pied exercé de haut en bas, le déchaussage s'effectuant essentiellement selon un mouvement de rotation du pied.

Ainsi, la première lame 14 est destinée à être déformée lors du chaussage et lors du déchaussage, alors que les lames latérales 16 et 17 sont destinées à être déformées plus particulièrement lors du déchaussage.

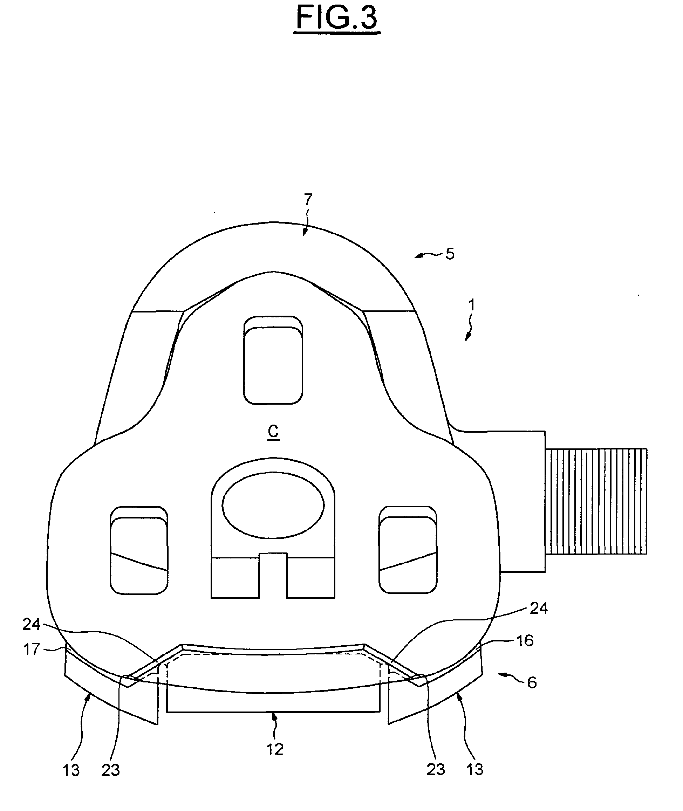

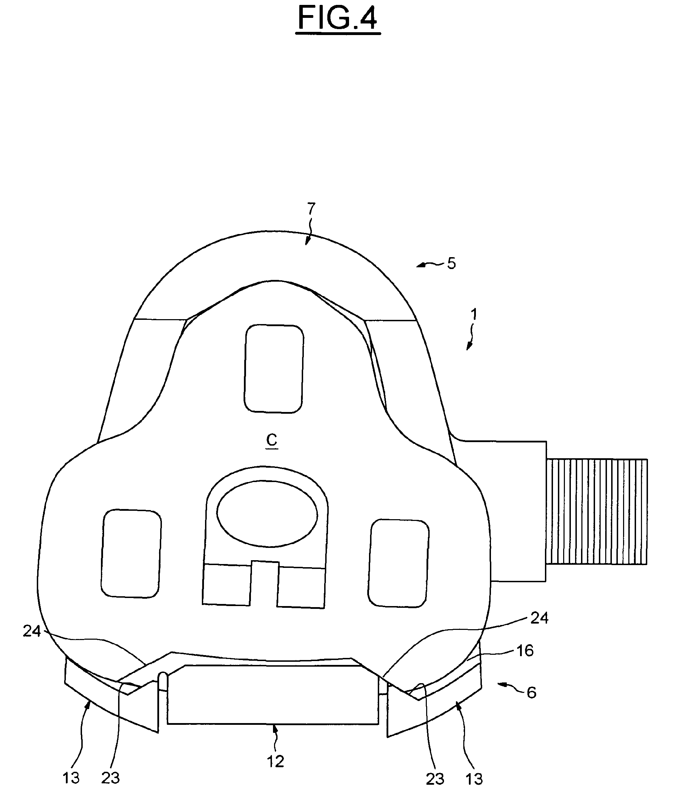

En se référant plus particulièrement à la figure 2, on voit que les crochets 18 et 19 des lames latérales sont chacun pourvus d'une surface d'appui 23 s'étendant de manière oblique à partir de l'extrémité avant 20 de sorte que, par exemple, cette surface d'appui 23 forme un angle d'environ 45° par rapport à un axe général longitudinal de la pédale et de sorte que ces surfaces d'appui s'étendent de manière oblique sensiblement vers l'extérieur de la pédale. Ces surfaces d'appui sont destinées à coopérer avec une surface d'appui complémentaire 24 prévue sur une cale C de chaussure (figures 3 et 4).

La lame médiane 12 est également pourvue de telles surfaces d'appui 25 qui s'étendent de part et d'autre de l'extrémité avant 21 du crochet 15. Une unique surface 25 de même qu'une unique lame latérale 16 ou 17 pourraient également être prévues, si l'on prévoit de n'autoriser un déchaussage que selon un sens de rotation du pied. Comme les surfaces d'appui 23 des lames latérales, celles-ci sont disposées sensiblement verticalement en étant orientées obliquement vers l'extérieur, de part et d'autre de la pédale.

Grâce à cet agencement, la lame médiane 14, dont le crochet est plus long, est tout d'abord sollicitée lors du chaussage pour l'encliquetage de la cale dans la pédale. Le crochet 21 comporte à cet effet une rampe d'encliquetage supérieure 26 orientée transversalement vers le bas et vers l'avant, c'est-à-dire vers une zone Z de réception de la cale et sur laquelle vient prendre appui une surface correspondante prévue sur la cale pour déformer lors de l'encliquetage la lame médiane vers l'arrière.

Le crochet 15 comporte en outre une butée transversale 27 s'étendant horizontalement sous la rampe 26. Ainsi, après encliquetage, le crochet 15 assure, conjointement avec les deuxièmes crochets 18 et 19 des lames latérales plus rigides, un maintien vertical de la cale.

En ce qui concerne les lames latérales, outre le maintien vertical, celles-ci assurent, d'une part, une retenue arrière de la cale en formant une butée et, d'autre part, un maintien latéral de la chaussure grâce à leur surface d'appui 23 qui coopère avec les surfaces d'appui correspondantes 24 de la cale.

En se référant aux figures 3 et 4, cette pédale s'utilise, lors du chaussage, après avoir inséré une portion en saillie avant de la cale dans les premiers moyens d'accrochage 7 avant, en encliquetant la cale selon un mouvement exercé de haut en bas dans le crochet 15 de la lame médiane 14. Lors de ce mouvement d'encliquetage, la cale exerce un effort sur la rampe supérieure 26 du crochet médian 15 de manière à déformer vers l'arrière la lame médiane 14. En raison du positionnement avancé de ce crochet, lors de cette étape, les crochets portés par les lames latérales ne sont pas sollicités.

Lors du roulage, la chaussure est alors maintenue verticalement par la lame médiane et le crochet d'extrémité 15 qu'elle porte ainsi que par les crochets 18 et 19 des lames latérales. Elle est également maintenue vers l'arrière par les lames latérales plus rigides et latéralement grâce aux surfaces d'appui 23 des lames latérales qui coopèrent avec les surfaces 24 correspondantes de la cale.

Pour procéder au déchaussage, il convient d'exercer un effort sur ces surfaces d'appui latéral par un mouvement de torsion du pied. Lors d'une première course de ce mouvement du pied, les surfaces d'appui 23 des lames latérales sont tout d'abord sollicitées par les surfaces de la cale, puis après déformation vers l'arrière des lames latérales 16 et 17, les surfaces d'appui 24 de la cale viennent déformer la lame médiane par appui sur les surfaces d'appui correspondantes 25 de manière à escamoter cette lame médiane jusqu'à permettre un dégagement de la cale.

On pourrait bien entendu prévoir indifféremment que les surfaces d'appui 23 et 25 soient sollicitées l'une après l'autre, en conformant de manière appropriée la surface correspondante de la cale ou en décalant le plan de la surface 25 de la lame médiane vers l'arrière par rapport au plan de la surface d'appui 23 ou, au contraire, que ces surfaces d'appui 23 et 25 agissent simultanément.

On notera que les lames latérales 16 et 17 ont une rigidité supérieure à celle de la lame médiane 14. Ainsi, l'effort de déchaussage, en particulier en début de course, est plus important que l'effort de chaussage.

Dans l'exemple de réalisation considéré, dans lequel le corps 2 de la pédale est réalisé en une seule pièce, cette rigidité accrue est obtenue en prévoyant des lames latérales 16 et 17 d'épaisseur accrue. Mais, bien entendu, dans le cas où le corps de pédale est réalisé en plusieurs pièces, on pourrait prévoir d'obtenir une rigidité accrue en utilisant des matériaux de rigidité différente.

Mais on pourra également utiliser, en variante, tout autre moyen permettant de conférer une rigidité réglable aux première et deuxième zone 12 et 13 et, en particulier aux lames 14, 16 et 17, dans le but de régler les forces de chaussage et de déchaussage.

On pourra par exemple prévoir des inserts longitudinaux de rigidification pour augmenter l'épaisseur des lames ou des brides maintenant localement les lames les unes aux autres à différents points.

Mais la réalisation du corps en une seule pièce est avantageuse dans la mesure où elle permet de réduire les coûts de fabrication. Comme illustré, la pédale monobloc peut ainsi être réalisée à partir d'un unique corps comprenant, à partir de la première extrémité 5, une première partie P1 délimitant la surface Z d'appui pour la cale, une deuxième partie P2 coudée, à convexité tournée vers la zone de réception de la cale, prolongée par une troisième portion coudée P3 délimitant l'axe d'articulation 9 pour le levier arrière et à concavité tournée vers la zone de réception de la cale et, enfin, vers l'arrière, une quatrième portion P4 comprenant la lame médiane 14 et les deux lames latérales 16 et 17 pourvues de leur crochet d'extrémité.

Dans l'exemple de réalisation qui vient d'être décrit, l'effort de chaussage, réduit par rapport à l'effort de déchaussage, est obtenu en dotant le levier arrière d'une lame médiane 14 de rigidité plus faible. On notera à cet égard que la longueur de la rampe 26 d'encliquetage du crochet 21 de la lame médiane est telle et, en particulier, supérieure aux surfaces latérales 23 des crochets des lames latérales, que l'on obtient un grand déplacement de l'ouverture du levier lors du chaussage ou du déchaussage et également un effort réduit. Au contraire, la longueur des surfaces d'appui 23 et 25 des lames latérale et médiane procure une résistance accrue et, par conséquent, combinée à l'épaisseur accrue des dernières lames 16 et 17, un bon maintien latéral et une buté arrière de la cale lors du pédalage et une résistance accrue lors du déchaussage.

On notera également que la largeur de la lame 14 médiane est supérieure à celle de chacune des deux lames latérales 16 et 17.

Il serait également possible, en variante, d'augmenter la rigidité de la lame médiane 14 de manière à augmenter la résistance lors du chaussage, et le cas échéant, diminuer la rigidité des lames latérales de manière à diminuer la résistance au déchaussage, en particulier en début de course.

## Revendications

1. Pédale automatique pour cycle, comprenant un corps de pédale (2) muni à une première extrémité (5) de premiers moyens d'accrochage (7) et à une deuxième extrémité (6) opposée à la première extrémité de deuxièmes moyens d'accrochage (10), un levier (8) déformable élastiquement portant les deuxièmes moyens d'accrochage et susceptible de se déformer entre une première position dans laquelle une cale (C) fixée sous une chaussure est maintenue entre les premiers et deuxièmes moyens d'accrochage (7, 10) et une deuxième position déformée permettant l'accrochage et le décrochage de la cale selon des mouvements d'accrochage et de décrochage respectifs, **caractérisée en ce que** le levier déformable comporte au moins une première zone (12) déformable lors des mouvements d'accrochage et de décrochage et au moins une deuxième zone (13) déformable lors de l'un des mouvements d'accrochage et de décrochage, lesdites premières et deuxièmes zones ayant des rigidités différentes.

2. Pédale selon la revendication 1, **caractérisée en ce que** le levier comporte au moins une première lame (14) pourvue d'un crochet (15) d'extrémité comprenant une rampe d'encliquetage transversale (26) pour la déformation de la première lame lors de l'accrochage et une butée transversale (27) destinée à assurer le maintien vertical de la chaussure.

3. Pédale selon la revendication 2, **caractérisée en ce que** la première lame (14) comporte en outre au moins une surface d'appui (25) orientée en oblique sensiblement latéralement et destinée à coopérer avec une surface d'appui complémentaire (24) de la cale au moins lors du déchaussage pour déformer la lame médiane.

4. Pédale selon l'une des revendications 2 et 3, **caractérisée en ce que** le levier comporte au moins une deuxième lame (16, 17) pourvue d'un deuxième crochet d'extrémité (18, 19) comprenant une surface d'appui (23) orientée en oblique sensiblement latéralement et destinée à coopérer avec une surface d'appui complémentaire (24) de la cale pour le maintien latéral et en buté arrière de la cale et lors du décrochage.

5. Pédale selon la revendication 4, **caractérisée en ce que** la rampe d'encliquetage (26) de la première lame a une longueur plus importante que la surface d'appui (23) de la deuxième lame.

6. Pédale automatique selon l'une des revendications 4 et 5, **caractérisée en ce que** la surface d'appui (23) s'étend selon un angle d'environ 45° par rapport à un axe longitudinal de la pédale.

7. Pédale selon l'une quelconque des revendications 4 à 6, **caractérisée en ce que** le levier comporte une première lame (14) et une deuxième lame (16, 17) disposée de chaque côté de la première lame, chaque deuxième lame comportant une surface d'appui (23) orientée sensiblement latéralement en oblique vers l'intérieur de la pédale.

8. Pédale selon la revendication 7, **caractérisée en ce que** les première et deuxième lames sont configurées de sorte que la rampe d'encliquetage du premier crochet (15) est, au repos, décalée par rapport à la surface d'appui des deuxièmes crochets(18, 19).

9. Pédale selon l'une quelconque des revendications 1 à 8, **caractérisée en ce que** lesdites premières et deuxièmes zones déformables sont réalisées à partir d'un même matériau et présentent des épaisseurs différentes pour leur conférer des rigidités différentes.

10. Pédale selon l'une quelconque des revendications 1 à 9, **caractérisée en ce que** lesdites deuxièmes zones ont une rigidité relativement plus importante que lesdites premières zones.

11. Pédale selon la revendication 10, **caractérisée en ce que** la première lame ayant une épaisseur plus faible que les deuxièmes lames, ladite première lame a une largeur plus importante que lesdites deuxièmes lames.

12. Pédale selon l'une quelconque des revendications 1 à 11, **caractérisée en ce que** le corps de pédale est réalisé en une pièce.

13. Pédale selon la revendication 12, **caractérisée en ce que** le corps de pédale comprend, de la première extrémité vers la deuxième extrémité, une première partie (P1) sensiblement plane, une deuxième partie (P2) coudée à convexité tournée vers une zone (z) de réception de la cale, une troisième partie coudée (P3) à concavité tournée vers ladite zone de réception de la cale et une quatrième partie constituant lesdits deuxièmes moyens d'accrochage.

14. Pédale selon l'une quelconque des revendications 1 à 13, **caractérisée en ce que** lesdites première et deuxième zone (12, 13) ont une rigidité réglable pour régler les forces de chaussage et de déchaussage.

15. Pédale selon la revendication 14, **caractérisée en ce que** lesdites première et deuxième zone zones (12, 13) sont dotées d'inserts de rigidification ou sont réunies localement par des brides.

## Patentansprüche

1. Automatisches Pedal für Fahrrad, das einen Pedalkörper (2), der mit einem ersten Ende (5) erster Einhängmittel (7) und einem gegenüber dem ersten Ende vorgesehenen zweiten Ende (6) zweiter Einhängmittel (10) versehen ist, einen elastisch verformbaren Hebel (8), der die zweiten Einhängmittel trägt und sich zwischen einer ersten Position, in der ein unter einem Schuh befestigter Keil (C) zwischen den ersten und zweiten Einhängmitteln (7, 10) gehalten wird, und einer zweiten, verformten Position, die das Einhängen und Aushängen des Keils entsprechend den Einhäng- bzw. Aushängbewegungen ermöglicht, bewegen kann, umfasst, **dadurch gekennzeichnet, dass** der verformbare Hebel wenigstens eine erste Zone (12), die bei Einhäng- und Aushängbewegungen verformbar ist, und wenigstens eine zweite Zone (13), die bei einer der Einhäng- und Aushängbewegungen verformbar ist, aufweist, wobei die erste und die zweite Zone unterschiedliche Starrheiten haben.

2. Pedal nach Anspruch 1, **dadurch gekennzeichnet, dass** der Hebel wenigstens eine erstes Schwinge (14) umfasst, die mit einem Endhaken (15) versehen ist, der eine transversale Einrastrampe (26) für die Verformung der ersten Schwinge beim Einhängen und einen transversalen Anschlag (27), der dazu bestimmt ist, den vertikalen Halt des Schuhs sicherzustellen, aufweist.

3. Pedal nach Anspruch 2, **dadurch gekennzeichnet, dass** die erste Schwinge (14) außerdem wenigstens eine Abstützoberfläche (25) aufweist, die im Wesentlichen seitlich schräg orientiert ist und dazu bestimmt ist, mit einer komplementären Abstützoberfläche (24) des Keils wenigstens beim Abnehmen des Schuhs zusammenzuwirken, um die mittlere Schwinge zu verformen.

4. Pedal nach einem der Ansprüche 2 und 3, **dadurch gekennzeichnet, dass** der Hebel wenigstens eine zweite Schwinge (16, 17) umfasst, die mit einem zweiten Endhaken (18, 19) versehen ist, der eine Abstützoberfläche (23) aufweist, die im Wesentlichen seitlich schräg orientiert ist und dazu bestimmt ist, mit einer komplementären Abstützoberfläche (24) des Keils zusammenzuwirken, um ihn seitlich zu halten und beim Aushängen einen hinteren Anschlag des Keils zu bilden.

5. Pedal nach Anspruch 4, **dadurch gekennzeichnet, dass** die Einrastrampe (26) der ersten Schwinge eine Länge besitzt, die größer ist als die Abstützoberfläche (23) der zweiten Schwinge.

6. Automatisches Pedal nach einem der Ansprüche 4 und 5, **dadurch gekennzeichnet, dass** sich die Abstützoberfläche (23) unter einem Winkel von etwa 45° in Bezug auf eine Längsachse des Pedals erstreckt.

7. Pedal nach einem der Ansprüche 4 bis 6, **dadurch gekennzeichnet, dass** der Hebel eine erste Schwinge (14) und eine zweite Schwinge (16, 17), die auf jeder Seite der ersten Schwinge angeordnet ist, umfasst, wobei jede zweite Schwinge eine Abstützoberfläche (23) aufweist, die im Wesentlichen seitlich schräg in das Pedal orientiert ist.

8. Pedal nach Anspruch 7, **dadurch gekennzeichnet, dass** die erste und die zweite Schwinge in der Weise konfiguriert sind, dass die Einrastrampe des ersten Hakens (15) in der Ruhestellung in Bezug auf die Abstützoberfläche der zweiten Haken (18, 19) versetzt ist.

9. Pedal nach einem der Ansprüche 1 bis 8, **dadurch gekennzeichnet, dass** die ersten und zweiten verformbaren Zonen aus demselben Material verwirklicht sind und unterschiedliche Dicken aufweisen, um ihnen verschiedene Steifigkeiten zu verleihen.

10. Pedal nach einem der Ansprüche 1 bis 9, **dadurch gekennzeichnet, dass** die zweiten Zonen eine Steifigkeit haben, die relativ größer ist als jene der ersten Zonen.

11. Pedal nach Anspruch 10, **dadurch gekennzeichnet, dass** die erste Schwinge, da sie eine geringere Dicke als die zweiten Schwinge hat, eine Breite hat, die größer als jene der zweiten Schwinge ist.

12. Pedal nach einem der Ansprüche 1 bis 11, **dadurch gekennzeichnet, dass** der Pedalkörper einteilig hergestellt ist.

13. Pedal nach Anspruch 12, **dadurch gekennzeichnet, dass** der Pedalkörper vom ersten Ende zum zweiten Ende einen ersten im Wesentlichen ebenen Teil (P1), einen zu einer Zone (z) für die Aufnahme des Keils gewendeten zweiten Teil (P2) mit konvexer Krümmung, einen zu der Keilaufnahmezone gewendeten dritten Teil (P3) mit konkaver Krümmung und einen vierten Teil, der die zweiten Einhängmittel bildet, umfasst.

14. Pedal nach einem der Ansprüche 1 bis 13, **dadurch gekennzeichnet, dass** die ersten und zweiten Zonen (12, 13) eine einstellbare Steifigkeit haben, um die Schuhanbringungs- und Schuhentnahmekräfte einzustellen.

15. Pedal nach Anspruch 14, **dadurch gekennzeichnet, dass** die ersten und zweiten Zonen (12, 13) mit Versteifungseinsätzen versehen sind oder lokal durch Flansche vereinigt sind.

## Claims

1. Automatic bicycle pedal, comprising a pedal body (2) equipped at a first end (5) with first attachment means (7) and at a second end (6), the opposite end to the first end with second attachment means (10), an elastically deformable lever (8) bearing the second attachment means and capable of being deformed between a first position in which a cleat (C) fixed to the underside of a shoe is held between the first and second attachment means (7, 10), and a deformed second position allowing the cleat to be attached and detached in respect of attachment and detachment movements, **characterized in that** the deformable lever comprises at least one first deformable zone (12) that can be deformed during attachment and detachment movements and at least one second deformable zone (13) that can be deformed during one of the attachment and detachment movements, the said first and second zones having different stiffnesses.

2. Pedal according to Claim 1, **characterized in that** the lever comprises at least a first blade (14) provided with an end hook (15) comprising a transverse clip-in ramp (26) for deforming the first blade upon attachment, and a transverse end-stop (27) intended to hold the cycle shoe vertically.

3. Pedal according to Claim 2, **characterized in that** the first blade (14) further comprises at least one bearing surface (25) oriented substantially laterally at an angle and intended to collaborate with a complementary bearing surface (24) belonging to the cleat, at least when the foot is being clipped out of the pedal, in order to deform the middle blade.

4. Pedal according to one of Claims 2 and 3, **characterized in that** the lever comprises at least a second blade (16, 17) provided with a second end hook (18, 19) comprising a bearing surface (23) oriented substantially laterally at an angle and intended to collaborate with a complementary bearing surface (24) belonging to the cleat in order to hold the cleat laterally and against a backstop and during detachment.

5. Pedal according to Claim 4, **characterized in that** the clip-in ramp (26) of the first blade is of a longer length than the bearing surface (23) of the second blade.

6. Automatic pedal according to one of Claims 4 and 5, **characterized in that** the bearing surface (23) extends at an angle of around 45° with respect to a longitudinal axis of the pedal.

7. Pedal according to any one of Claims 4 to 6, **characterized in that** the lever comprises a first blade (14) and a second blade (16, 17) arranged on each side of the first blade, each second blade comprising a bearing surface (23) oriented substantially laterally at an angle towards the inside of the pedal.

8. Pedal according to Claim 7, **characterized in that** the first and second blades are configured in such a way that the clip-in ramp of the first hook (15) is, when at rest, offset from the bearing surface of the second hooks (18, 19).

9. Pedal according to any one of Claims 1 to 8, **characterized in that** the said first and second deformable zones are made of the same material and have different thicknesses in order to give them different stiffnesses.

10. Pedal according to any one of Claims 1 to 9, **characterized in that** the said second zones have a relatively higher stiffness than the said first zones.

11. Pedal according to Claim 10, **characterized in that**, with the first blade having a smaller thickness than the second blades, the said blade has a greater width than the said second blades.

12. Pedal according to any one of Claims 1 to 11, **characterized in that** the pedal body is made as a single piece.

13. Pedal according to Claim 12, **characterized in that** the pedal body comprises, from the first end to towards the second end, a substantially flat first part (P1), a bent-over second part (P2) with its convex face facing towards a cleat-accommodating zone (z), a bent-over third part (P3) with its concave face facing towards the said cleat-accommodating zone, and a fourth part that constitutes the said second attachment means.

14. Pedal according to any one of Claims 1 to 13, **characterized in that** the said first and second zones (12, 13) have a stiffness that can be adjusted in order to adjust the forces to clip the foot into and out of the pedal.

15. Pedal according to Claim 14, **characterized in that** the said first and second zones (12, 13) are provided with stiffening inserts or are locally connected by flanges.
